# FASCICULE DE BREVET EUROPEEN

(11) **EP 3 166 712 B1**
(45) Date de publication et mention de la délivrance du brevet: **05.06.2024**
(21) Numéro de dépôt: 15734363.3
(22) Date de dépôt: 06.07.2015
(51) Int. Cl.: B01D 61/36, G01N 1/22

(54) **BOUCHON DE CAPTAGE D'UN GAZ DISSOUS DANS UN LIQUIDE ET DISPOSITIF DE MESURE**
STOPFEN ZUR AUFNAHME EINES IN EINER FLÜSSIGKEIT GELÖSTEN GASES UND MESSVORRICHTUNG
PLUG FOR CAPTURING A GAS DISSOLVED IN A LIQUID, AND MEASUREMENT DEVICE

(30) Priorité: 07.07.2014 FR 1456506
(43) Date de publication de la demande: 17.05.2017
(73) Titulaire: Franatech AS, 0157 Oslo (NO)
(72) Inventeur: MASSON, Michel, 21335 Lüneburg (DE); JOKUBEIT, Thorsten, 21394 Kirchgellersen (DE); BUSCH, David, 21337 Lüneburg (DE)
(74) Mandataire: Argyma
(86) Numéro de dépôt international: PCT/EP2015/065315
(87) Numéro de publication internationale: WO 2016/005313

(56) Documents cités:
- EP-A1- 0 054 537
- EP-A1- 0 174 417
- DE-A1- 19 604 606
- DE-A1- 19 703 744
- FR-A- 1 573 147
- GB-A- 1 375 603
- PEER FIETZEK ET AL: "In situ Quality Assessment of a Novel Underwater pCO2 Sensor Based on Membrane Equilibration and NDIR Spectrometry", JOURNAL OF ATMOSPHERIC AND OCEANIC TECHNOLOGY, vol. 31, no. 1, 1 January 2014 (2014-01-01), pages 181-196, XP055720219, US ISSN: 0739-0572, DOI: 10.1175/JTECH-D-13-00083.1

## Description

### Domaine technique

L'invention se rapporte au domaine des capteurs de mesure de la valeur d'un paramètre d'un gaz dissous dans un liquide et concerne plus particulièrement une embase d'un module de captage d'au moins un gaz dissous dans un liquide, un tel module de captage, un dispositif de mesure comprenant un tel module et un procédé de captage d'au moins un gaz dissous dans un liquide.

L'invention trouve plus particulièrement son application dans le domaine des capteurs étanches destinés à être immergés dans un milieu aquatique (lacs, océans...).

### Etat de la technique

Il est connu d'utiliser un dispositif pour mesurer la valeur d'un ou plusieurs paramètres d'un gaz dissous dans un liquide tels que, par exemple, sa concentration ou sa pression. A titre d'exemple, on utilise un tel dispositif pour mesurer la concentration de méthane ou de dioxyde de carbone dans les océans ou les lacs afin de déterminer l'influence de la pollution sur ces environnements ou de détecter d'éventuelles fuites de gaz à proximité d'un pipeline.

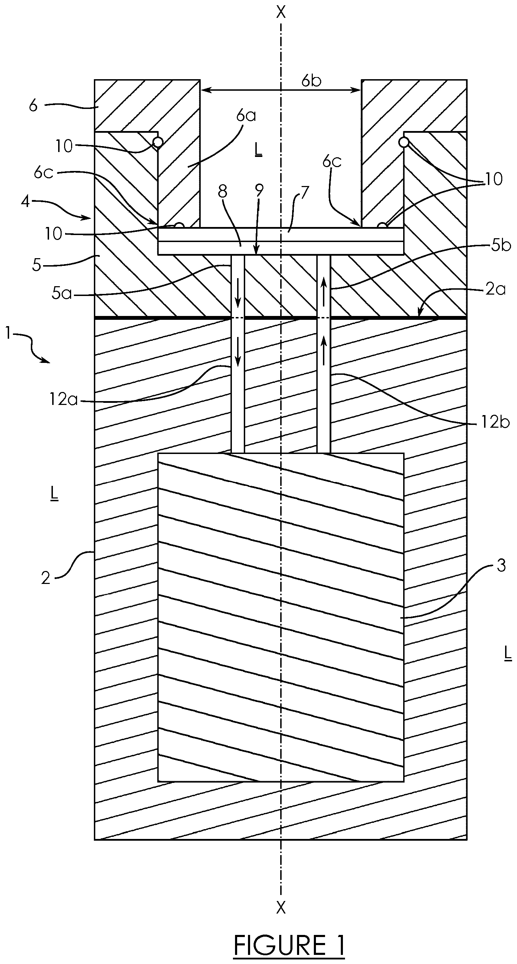

Un dispositif de mesure 1 connu, illustré à la figure 1, comprend un corps cylindrique 2 s'étendant selon un axe longitudinal X et à l'intérieur duquel est monté un capteur de mesure 3. Un module de captage 4 est monté sur l'une 2a des extrémités du corps cylindrique 2 afin de capter les gaz dissous dans le liquide L dans lequel le dispositif 1 est immergé.

Ce module de captage 4 se présente de manière connue sous la forme d'un bouchon comprenant une embase 5 cylindrique montée sur le corps 2 et comprenant un canal d'admission 5a des gaz provenant du liquide L et un canal d'évacuation 5b des gaz vers le liquide L.

Une couronne 6 est montée sur l'embase 5 de manière à maintenir une membrane 7 et un disque de support 8 de ladite membrane 7. Ce disque 8 est à la fois métallique, afin de supporter la membrane 7 et éviter qu'elle se déchire sous la pression du liquide L, et poreux, afin d'autoriser le passage des gaz captés par la membrane 7.

La couronne 6 comprend une portion cylindrique interne 6a s'étendant à l'intérieur de l'embase 5 et définissant une ouverture centrale 6b permettant les échanges de gaz à travers la membrane 7. La membrane 7 et le disque de support 8 sont maintenus sur une face d'échange 9 de gaz de l'embase 5 par l'extrémité inférieure 6c de cette portion cylindrique interne 6a (relativement à la disposition du bouchon sur la figure 1).

Afin d'éviter que le liquide L ne pénètre à l'intérieur du corps cylindrique 2, le dispositif 1 comprend dans cet exemple des joints toriques 10 disposés, d'une part, entre l'embase 5 et la portion cylindrique interne 6a de la couronne 6 et, d'autre part, entre l'extrémité de la portion cylindrique interne 6a de la couronne 6 et la membrane 7.

Le corps 2 comprend, entre l'embase 5 et le capteur de mesure 3, un conduit d'entrée 12a des gaz qui est en communication de fluide avec le canal d'admission 5a et un conduit de sortie 12b des gaz qui est en communication de fluide avec le canal d'évacuation 5b. Le conduit d'entrée 12a permet d'acheminer les gaz du canal d'admission 5a jusqu'au capteur de mesure 3 et le conduit de sortie 12b permet d'acheminer les gaz du capteur de mesure 3 jusqu'au canal d'évacuation 5b.

En fonctionnement du dispositif 1, une partie des gaz dissous dans le liquide L traverse successivement l'ouverture centrale 6b, la membrane 7 et le disque de support 8 puis sont acheminés par le canal d'admission 5a et le conduit d'entrée 12a jusqu'au capteur de mesure 3. Le capteur 3 mesure alors le ou les paramètres du gaz à étudier puis les gaz sont acheminés par le conduit de sortie 12b et le canal d'évacuation 5b jusqu'au disque de support 8 qu'ils traversent au moins en partie de même que la membrane 7 jusqu'au liquide L.

Dans un tel dispositif 1, l'échange de gaz entre le disque de support 8 et le canal d'admission 5a d'une part, et entre le canal d'évacuation 5b et le disque de support 8 d'autre part, est peu efficace car la surface d'échange est relativement faible. En effet, la surface des ouvertures du canal d'admission 5a et du canal d'évacuation 5b débouchant sur le disque 8 est très inférieure à la surface du disque 8. Il en résulte une circulation lente et difficile des gaz dans le dispositif 1, ce qui présente des inconvénients.

Une solution évidente serait d'augmenter la surface d'échange en augmentant notamment les dimensions du canal d'admission 5a et du canal d'évacuation 5b mais une telle configuration augmenterait le temps de réponse du dispositif 1, c'est-à-dire le temps nécessaire au capteur pour mesurer la valeur du ou des paramètres du gaz étudié, ce qui présente un inconvénient important.

Les documents DE19604606A1, FR1573147A, EP0174417A1, GB1375603A et Fietzek et al. ("In situ Quality Assessment of a Novel Underwater pCO2 Sensor Based on Membrane Equilibration and NDIR Spectrometry", J. Atmos. Océan. Technol., vol. 31, pages 181-196) décrivent un dispositif de mesure d'un paramètre d'un gaz dissous dans un liquide contenu dans un récipient de fermentation. Toutefois, ces solutions présentent des inconvénients relatifs au guidage des gaz.

La présente invention a pour but de remédier au moins en partie à ces inconvénients en proposant un bouchon de captage d'un gaz dissous dans un liquide qui soit à la fois simple, efficace et fiable tout en permettant un faible temps de réponse du dispositif.

### Présentation générale de l'invention

A cette fin, l'invention a donc tout d'abord pour objet un bouchon de captage selon la revendication 1.

De tels moyens de guidage permettent avantageusement d'acheminer le gaz capté par l'embase vers le canal d'admission, améliorant ainsi la circulation du gaz dans un dispositif de mesure comprenant une telle embase. Les moyens de guidage sont aménagés sur ou dans la face de captage de gaz de sorte à améliorer la circulation du gaz. Un sillon est avantageusement aisé et rapide à creuser sur la face de captage. La largeur du sillon est égale au diamètre de l'orifice d'admission et au diamètre de l'orifice d'évacuation pour permettre d'éviter, d'une part, une augmentation de la pression du gaz qui pourrait endommager le dispositif de mesure et, d'autre part, de perturber le flux de gaz qui s'écoule dans le sillon de sorte que le dispositif de mesure puisse fonctionner efficacement. Le sillon présente, au moins en partie, une forme de spirale de manière à couvrir une surface importante de la face de captage et ainsi guider une grande partie du gaz capté par la membrane. Un disque de support est aisé à fabriquer et à assembler sur l'embase.

De préférence, les moyens de guidage créés un circuit de guidage du gaz entre l'orifice d'évacuation et l'orifice d'admission. Un tel circuit, en partie fermé, permet d'améliorer la circulation du gaz dans un dispositif de mesure comprenant une telle embase.

Dans une forme de réalisation, l'embase se présente sous la forme d'un cylindre dont une extrémité est fermée par la paroi d'échange de gaz.

Selon une caractéristique de l'invention, le disque de support est poreux afin de permettre au gaz de le traverser.

Le disque de support est métallique, ce qui le rend solide. Il peut par exemple être réalisé par frittage.

Selon une caractéristique de l'invention, la membrane se présente sous la forme d'un disque en silicone, qui est un matériau résistant.

De manière avantageuse, l'élément de maintien se présente sous la forme d'une couronne.

De manière avantageuse, le bouchon de captage comprend au moins un joint torique, de préférence deux joints toriques intégrés au bouchon, par exemple, entre la membrane et l'élément de maintien et entre l'élément de maintien et l'embase afin de renforcer l'étanchéité du bouchon de captage.

De préférence, le bouchon de captage est configuré pour être monté sur un corps d'un dispositif de mesure, de préférence au niveau de l'une de ses extrémités. On notera que le bouchon de captage peut être monté sur n'importe quelle partie d'un corps du dispositif de mesure telle qu'une paroi.

L'invention concerne aussi un dispositif de mesure de la valeur d'au moins un paramètre d'au moins un gaz dissous dans un liquide, ledit dispositif comprenant un corps, de préférence cylindrique, et un bouchon de captage, tel que présenté précédemment, monté sur ledit corps, le corps comprenant un conduit d'entrée de gaz qui est en communication de fluide avec le canal d'admission du gaz du bouchon de captage et un conduit de sortie de gaz qui est en communication de fluide avec le canal d'évacuation du gaz du bouchon de captage.

Selon un aspect de l'invention, le bouchon de captage est monté sur l'une des extrémités du corps du dispositif de mesure. L'assemblage et le verrouillage d'un dispositif de mesure avec un tel bouchon de captage est aisé et rapide.

Divulgué est un procédé de captage d'au moins un gaz dissous dans un liquide afin d'en mesurer une valeur d'au moins un paramètre, ledit procédé étant mis en oeuvre par un dispositif de mesure comprenant un corps dans lequel est disposé un capteur de mesure d'au moins une valeur d'au moins un paramètre d'au moins un gaz et un bouchon de captage de gaz, tel que présenté précédemment, monté sur ledit corps, ledit procédé étant remarquable en ce qu'il comprend une étape de guidage du gaz vers le canal d'admission.

### Description des figures

La figure 1 (déjà commentée) est une vue schématique en coupe longitudinale d'un dispositif de mesure de la pression d'un gaz dissous dans un liquide de l'art antérieur.
La figure 2 est une vue schématique en coupe longitudinale d'un dispositif de mesure selon l'invention.
La figure 3 est une vue de dessus partielle d'un module de captage comprenant une embase selon l'invention sur laquelle est disposée une couronne de maintien.

### Description d'une forme de réalisation du système selon l'invention

### I. Dispositif de mesure 20

Le dispositif selon l'invention permet de mesurer une valeur d'au moins un paramètre d'au moins un gaz dissous dans un liquide, tel que, par exemple, sa concentration ou sa pression. Un tel gaz peut être, par exemple, du méthane ou du dioxyde de carbone, dissous dans de l'eau de mer ou de l'eau douce.

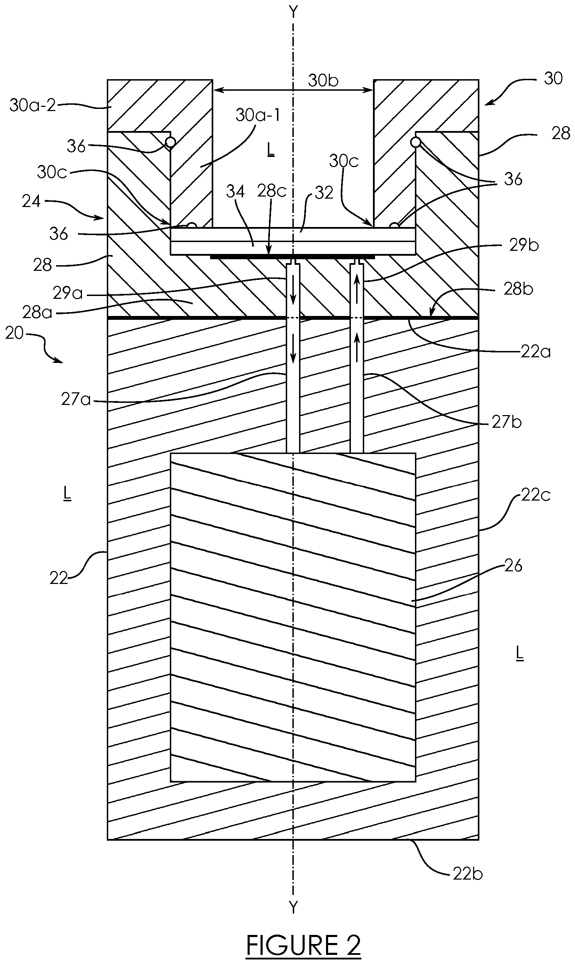

Dans la forme de réalisation préférée du dispositif 20 selon l'invention illustrée à la figure 2, le dispositif de mesure 20 comprend un corps 22 creux s'étendant selon un axe longitudinal Y et un module 24 de captage de gaz monté sur ledit corps 22.

### a) Corps 22

En référence à la figure 2, le corps 22 se présente sous la forme d'un cylindre creux s'étendant selon un axe longitudinal Y et comportant deux extrémités 22a et 22b. Le module de captage 24 de gaz est monté sur le corps 22 au niveau de l'une 22a de ses extrémités tandis que l'autre extrémité 22b est obturée.

Un capteur 26 de mesure est monté de manière connue à l'intérieur du corps creux 22. Ce capteur 26 permet de mesurer la valeur d'au moins un paramètre d'au moins un gaz dissous dans un liquide L dans lequel le dispositif 20 est immergé

Le corps creux 22 comprend un conduit d'entrée de gaz 27a et un conduit de sortie de gaz 27b. Le conduit d'entrée de gaz 27a permet d'acheminer des gaz jusqu'au capteur de mesure 26 afin que celui-ci en mesure au moins l'un des paramètres. Le conduit de sortie de gaz 27b permet d'évacuer les gaz du capteur de mesure 26 une fois la ou les mesures de paramètres réalisées.

### b) Module de captage 24

Dans cet exemple, comme mentionné précédemment, le module de captage 24 est monté sur une extrémité 22a du corps 22. On notera toutefois que, dans une autre forme de réalisation, le module de captage 24 selon l'invention pourrait être monté sur n'importe quelle partie du corps 22, par exemple sur une paroi latérale 22c (toujours en référence à la figure 2).

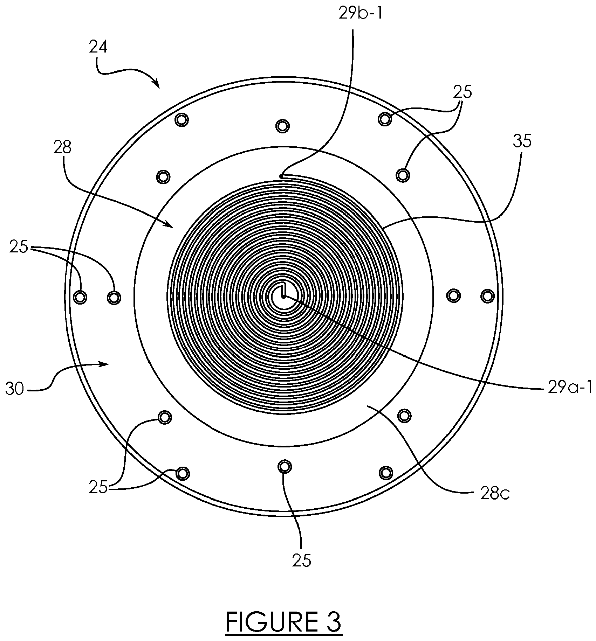

Le module de captage 24 peut être monté sur le corps 22 par tout procédé de fixation approprié, par exemple par soudage, par vissage ou au moyen d'un ensemble de vis 25 comme illustré à la figure 3. En variante, le module de captage 24 pourrait être au moins en partie issu de matière du corps 22.

Le module de captage 24 permet de capter les gaz dissous dans le liquide L afin que le capteur de mesure 26 puisse mesurer au moins un paramètre d'au moins l'un d'entre eux. Le module de captage 24 autorise donc le ou lesdits gaz à circuler du liquide L vers l'intérieur du corps 22 et de l'intérieur du corps 22 vers le liquide L, l'intérieur du dispositif 20 étant imperméable au liquide L.

Le module de captage 24 se présente sous la forme d'un bouchon monté sur une extrémité 22a du corps 22.

Comme illustré à la figure 3, le module de captage 20 comprend une embase 28 et un élément de maintien 30.

### i) Embase 28

L'embase 28 se présente sous la forme d'une pièce monobloc creuse de forme cylindrique, de préférence métallique, obturée à l'une de ses extrémités par une paroi 28a traversée par un canal d'admission 29a du gaz et un canal d'évacuation 29b du gaz.

Cette paroi 28a comprend une face de montage 28b sur le corps 22 et une face de captage de gaz 28c, opposée à la face de montage 28b.

Le canal d'admission 29a du gaz est connecté fluidiquement au conduit d'entrée 27a du corps 22. De même, le conduit de sortie 29b du gaz est connecté fluidiquement au conduit de sortie 27b de gaz du corps 22.

Un élément de support d'une membrane 32, se présentant sous la forme d'un disque 34 métallique et poreux, est disposé sur la face de captage 28c de l'embase 28 qui est en communication de fluide à la fois avec le canal d'admission 29a et avec le canal d'évacuation 29b afin d'autoriser le passage des gaz captés dans le liquide L par la membrane 32. Ce disque de support 34 permet notamment d'éviter que la membrane 32 se déchire sous l'effet de la pression du liquide L.

Ainsi, le canal d'admission 29a et le conduit d'entrée 27a forment une voie de communication fluidique entre le disque 34 et le capteur de mesure 26. De même, le canal d'évacuation 29b et le conduit de sortie 27b forment une voie de communication fluidique entre le capteur de mesure 26 et le disque 34.

La membrane 32 se présente de préférence sous la forme d'un disque réalisé en silicone.

Selon l'invention, l'embase 28 comprend des moyens de guidage du gaz vers le canal d'admission 29a du gaz. Ces moyens de guidage sont aménagés de préférence sur ou dans la face de captage 28c du gaz.

Dans la forme de réalisation préférée de l'embase selon l'invention illustrée à la figure 3, les moyens de guidage se présentent sous la forme d'un sillon 35 creusé sur la face de captage 28c de gaz de l'embase 28. Pour des raisons de clarté, seuls l'embase 28 et un élément de maintien 30 disposé sur l'embase 28 et se présentant sous la forme d'une couronne ont été représentés à la figure 3, la membrane 32 et le disque de support 34 n'étant pas représentés.

Le sillon 35 présente une forme de spirale de manière à couvrir une surface importante de la face de captage 28c et guider ainsi aisément et rapidement une grande partie des gaz ayant traversé la membrane 32 et le disque de support 34.

Dans cet exemple, le canal d'admission 29a débouche avantageusement dans la région centrale de la spirale au niveau d'un orifice d'admission 29a-1 afin de concentrer les gaz vers le canal d'admission 29a tandis que le canal d'évacuation 29b débouche avantageusement dans la région périphérique de la spirale au niveau d'un orifice d'évacuation 29b-1 afin d'évacuer les gaz par la portion périphérique du disque 34 et de la membrane 32 (en référence à la figure 2).

L'utilisation d'un sillon en forme de spirale n'est aucunement limitative de la portée de la présente invention et on notera que les moyens de guidage peuvent se présenter sous toute autre forme adaptée.

L'utilisation de moyens de guidage permet de limiter la surface de l'orifice d'admission 29a-1 des gaz et la surface de l'orifice d'évacuation 29b-1 des gaz de manière à obtenir un temps de réponse faible du dispositif 20.

La membrane 32 et le disque de support 34 sont maintenus sur la face de captage 28c de gaz de l'embase 28 par l'élément de maintien 30.

### ii) Elément de maintien 30

L'élément de maintien 30 se présente sous la forme d'une couronne montée sur l'embase 28, par exemple par vissage ou à l'aide d'une pluralité de vis (non représentées).

L'élément de maintien 30 comprend une portion cylindrique interne 30a-1 et une portion annulaire externe 30a-2.

La portion cylindrique interne 30a-1 s'étend à l'intérieur de l'embase 28 et définit une ouverture centrale 30b permettant au liquide L de venir au contact de la membrane 32. La portion annulaire externe 30a-2 repose en appui sur l'embase 28.

La membrane 32 et le disque de support 34 sont maintenus sur la face de captage 28c de gaz de l'embase 5 par une extrémité 30c de la portion cylindrique interne 30a-1.

Afin d'améliorer l'étanchéité du dispositif 20, celui-ci comprend, comme illustré sur la figure 2, des joints toriques 36 disposés, d'une part, entre l'embase 28 et la portion cylindrique interne 30a-1 de l'élément de maintien 30 et, d'autre part, entre l'extrémité 30c de la portion cylindrique interne 30a-1 de l'élément de maintien 30 et la membrane 32.

### II. Mise en oeuvre

Lorsque le dispositif de mesure 20 est immergé dans un liquide L, celui-ci vient au contact de la membrane 32 à travers l'ouverture 30b définie par l'élément de maintien 30. Les gaz dissous dans le liquide L traversent tout d'abord la membrane 32 et l'élément de support 34.

Lorsqu'ils atteignent la face de captage 28c de l'embase 28, les gaz sont guidés par le sillon 35 jusqu'à l'orifice d'admission 29a-1 du canal d'admission 29a.

Les gaz empruntent alors le canal d'admission 29a puis le conduit d'entrée 27a afin d'atteindre le capteur de mesure 26.

Le capteur 26 mesure alors au moins une valeur d'au moins un paramètre d'au moins l'un des gaz acheminés. Une fois que la mesure a été effectuée, les gaz sont évacués du capteur de mesure 26 par le conduit de sortie 27b puis le canal d'évacuation 29b pour déboucher via l'orifice d'évacuation 29b-1 au niveau de la paroi de captage 28c.

Au moins une partie des gaz évacués traversent alors l'élément de support 34 puis la membrane 32 pour retourner dans le liquide L, une partie des gaz pouvant aussi circuler à nouveau dans le circuit de gaz ainsi créé entre l'élément de support 34 et le capteur de mesure 26 via le sillon 35.

Il va de soi que le dispositif de mesure 20 pourrait aussi fonctionner, mutatis mutandis, dans le sens contraire du sens de circulation de gaz illustré sur la figure 3 en inversant le sens de la spirale et le sens de fonctionnement du capteur de mesure 26.

La circulation du flux de gaz à travers le dispositif de mesure 20 constitue donc avantageusement un circuit de circulation efficace du gaz dans la mesure où les gaz captés par la membrane 32 sur toute sa surface sont guidés vers l'entrée du canal d'admission 29a-1, ce qui permet d'avoir un temps de réponse du dispositif faible tout en ayant un dispositif de mesure simple, efficace et fiable.

## Revendications

1. Bouchon de captage (24) d'au moins un gaz dissous dans un liquide (L) agencé pour être monté sur un corps (22) cylindrique d'un dispositif de mesure (20) de la valeur d'au moins un paramètre dudit gaz, ledit bouchon de captage (24) comprenant une embase (28) cylindrique, au moins une membrane (32), au moins un disque de support (34) de ladite au moins une membrane (32), et un élément de maintien (30) de l'au moins une membrane (32) et de l'au moins un disque de support (34) métallique sur l'embase (28), ladite embase (28) étant agencée pour être montée sur le corps (22) du dispositif de mesure (20) et comprenant :
- un canal d'admission (29a) du gaz et un canal d'évacuation (29b) du gaz, le disque de support (34) étant en communication de fluide avec ledit canal d'admission (29a) et ledit canal d'évacuation (29b),
- une paroi (28a) d'échange de gaz comprenant une face de montage (28b) sur le corps (22) du dispositif de mesure (20) et une face de captage (28c) de gaz, opposée à la face de montage (28b), recevant le disque de support (34) de la membrane (32), le canal d'admission (29a) du gaz et le canal d'évacuation (29b) du gaz traversant ladite paroi (28a) de la face de montage (28b) à la face de captage (28c) sur laquelle ils débouchent respectivement par un orifice d'admission (29a-1) et un orifice d'évacuation (29b-1),
- des moyens de guidage (35) du gaz vers le canal d'admission (29a), lesdits moyens de guidage (35) comprenant au moins un sillon (35) creusé sur la face de captage (28c) de gaz et présentant, au moins en partie, une forme de spirale, l'orifice (29a-1) du canal d'admission (29a) se situant au niveau d'une zone centrale de la spirale tandis que l'orifice (29b-1) du canal d'évacuation (29b) se situe au niveau de la périphérie de la spirale, la largeur du sillon (35) est égale au diamètre de l'orifice d'admission (29a-1) et au diamètre de l'orifice d'évacuation (29b-1),
l'élément de maintien se présentant sous la forme d'une couronne (30) comprenant une portion cylindrique interne (30a-1) et une portion annulaire externe (30a-2), ladite portion cylindrique interne (30a-1) s'étendant à l'intérieur de l'embase (28) et définissant une ouverture centrale (30b) permettant au liquide (L) de venir au contact de la membrane (32), la portion annulaire externe (30a-2) reposant en appui sur l'embase (28), la membrane (32) et le disque de support (34) étant maintenus sur la face de captage (28c) de gaz de l'embase (5) par une extrémité (30c) de la portion cylindrique interne (30a-1).

2. Bouchon de captage (24) selon la revendication 1, **caractérisé en ce que** les moyens de guidage (35) créent un circuit de guidage du gaz entre l'orifice d'évacuation (29b-1) et l'orifice d'admission (29a-1).

3. Bouchon de captage (24) selon l'une des revendications précédentes, **caractérisé en ce que** le disque de support (34) est poreux.

4. Bouchon de captage (24) selon l'une des revendications précédentes, **caractérisé en ce que** la membrane (32) se présente sous la forme d'un disque en silicone.

5. Bouchon de captage (24) selon l'une des revendications précédentes, comprenant au moins un joint torique (36).

6. Dispositif (20) de mesure de la valeur d'au moins un paramètre d'au moins un gaz dissous dans un liquide (L), ledit dispositif (20) étant destiné à être immergé dans ledit liquide (L) et comprenant un corps (22), dans lequel est monté un capteur de mesure de la valeur d'au moins un paramètre d'au moins un gaz dissous dans le liquide (L), et un bouchon de captage (24), selon l'une des revendications précédentes, monté sur ledit corps (22), le corps (22) comprenant un conduit d'entrée (27a) de gaz qui est en communication de fluide avec le canal d'admission (29a) du gaz du bouchon de captage (24) et un conduit de sortie (27b) de gaz qui est en communication de fluide avec le canal d'évacuation (29b) du gaz du bouchon de captage (24).

## Patentansprüche

1. Stopfen zur Aufnahme (24) mindestens eines in einer Flüssigkeit (L) gelösten Gases, der eingerichtet ist, um auf einem zylindrischen Körper (22) einer Vorrichtung (20) zum Messen des Wertes mindestens eines Parameters des Gases angebracht zu sein, wobei der Aufnahmestopfen (24) eine zylindrische Basis (28), mindestens eine Membran (32), mindestens eine Trägerscheibe (34) der mindestens einen Membran (32) und ein Halteelement (30) der mindestens einen Membran (32) und der mindestens einen metallischen Trägerscheibe (34) auf der Basis (28) umfasst, wobei die Basis (28) eingerichtet ist, um auf dem Körper (22) der Messvorrichtung (20) angebracht zu sein und umfasst:
- einen Einlasskanal (29a) des Gases und einen Auslasskanal (29b) des Gases, wobei die Trägerscheibe (34) mit dem Einlasskanal (29a) und dem Auslasskanal (29b) in Fluidkommunikation ist,
- eine Gasaustauschwand (28a), umfassend eine Montagefläche (28b) auf dem Körper (22) der Messvorrichtung (20) und eine Gasaufnahmefläche (28c) gegenüber der Montagefläche (28b), die die Trägerscheibe (34) der Membran (32) empfängt, wobei der Einlasskanal (29a) des Gases und der Auslasskanal (29b) des Gases die Wand (28a) von der Montagefläche (28b) zur Aufnahmefläche (28c) durchqueren, auf der sie jeweils mittels einer Einlassöffnung (29a-1) und einer Auslassöffnung (29b-1) ausmünden,
- Führungsmittel (35) des Gases zum Einlasskanal (29a), wobei die Führungsmittel (35) mindestens eine Rille (35) umfassen, die auf der Gasaufnahmefläche (28c) eingearbeitet ist und mindestens teilweise eine Spiralform aufweist, wobei sich die Öffnung (29a-1) des Einlasskanals (29a) im Bereich einer zentralen Zone der Spirale befindet, wohingegen sich die Öffnung (29b-1) des Auslasskanals (29b) im Bereich der Peripherie der Spirale befindet, wobei die Breite der Rille (35) gleich dem Durchmesser der Einlassöffnung (29a-1) und dem Durchmesser der Auslassöffnung (29b-1) ist,
wobei das Halteelement in Form eines Kranzes (30) vorliegt, der einen inneren zylindrischen Abschnitt (30a-1) und einen äußeren ringförmigen Abschnitt (30a-2) umfasst, wobei sich der innere zylindrische Abschnitt (30a-1) im Inneren der Basis (28) erstreckt und eine zentrale Öffnung (30b) definiert, die es der Flüssigkeit (L) gestattet, mit der Membran (32) in Kontakt zu treten, wobei der äußere ringförmige Abschnitt (30a-2) auf der Basis (28) aufliegt, wobei die Membran (32) und die Trägerscheibe (34) auf der Gasaufnahmefläche (28c) der Basis (5) von einem Ende (30c) des inneren zylindrischen Abschnitts (30a-1) gehalten werden.

2. Aufnahmestopfen (24) nach Anspruch 1, **dadurch gekennzeichnet, dass** die Führungsmittel (35) einen Führungskreis des Gases zwischen der Auslassöffnung (29b-1) und der Einlassöffnung (29a-1) schaffen.

3. Aufnahmestopfen (24) nach einem der vorangehenden Ansprüche, **dadurch gekennzeichnet, dass** die Trägerscheibe (34) porös ist.

4. Aufnahmestopfen (24) nach einem der vorangehenden Ansprüche, **dadurch gekennzeichnet, dass** die Membran (32) in Form einer Silikonscheibe vorliegt.

5. Aufnahmestopfen (24) nach einem der vorangehenden Ansprüche, umfassend mindestens eine torische Dichtung (36).

6. Vorrichtung (20) zum Messen des Wertes mindestens eines Parameters mindestens eines in einer Flüssigkeit gelösten Gases (L), wobei die Vorrichtung (20) bestimmt ist, in die Flüssigkeit (L) eingetaucht zu sein und einen Körper (22) umfasst, in dem ein Sensor zum Messen des Wertes mindestens eines Parameters mindestens eines in der Flüssigkeit (L) gelösten Gases angebracht ist, und einen Aufnahmestopfen (24) nach einem der vorangehenden Ansprüche, der auf dem Körper (22) angebracht ist, wobei der Körper (22) eine Gaseingangsleitung (27a) umfasst, die mit dem Einlasskanal (29a) des Gases des Aufnahmestopfens (24) in Fluidkommunikation ist, und eine Gasausgangsleitung (27b), die in Fluidkommunikation mit dem Auslasskanal (29b) des Gases des Aufnahmestopfens (24) ist.

## Claims

1. Stopper for capturing (24) at least one gas dissolved in a liquid (L) arranged to be mounted on a cylindrical body (22) of a measuring device (20) of the value of at least one parameter of said gas, said capturing stopper (24) comprising a cylindrical base (28), at least one membrane (32), at least one support disc (34) of said at least one membrane (32), and an element for holding (30) the at least one membrane (32) and the at least one metal support disc (34) on the base (28), said base (28) being arranged to be mounted on the body (22) of the measuring device (20) and comprising:
- a gas intake channel (29a) and a gas discharge channel (29b), the support disc (34) being in fluid communication with said intake channel (29a) and said discharge channel (29b),
- a gas exchange wall (28a) comprising a mounting face (28b) on the body (22) of the measuring device (20) and a gas capturing face (28c), opposite the mounting face (28b), receiving the support disc (34) of the membrane (32), the gas intake channel (29a) and the gas discharge channel (29b) passing through said wall (28a) from the mounting face (28b) to the capturing face (28c) on which they respectively exit through an intake orifice (29a-1) and a discharge orifice (29b-1),
- means for guiding (35) the gas to the intake channel (29a), said means for guiding (35) comprising at least one groove (35) made on the gas capturing face (28c) and having, at least in part, a spiral shape, the orifice (29a-1) of the intake channel (29a) located at a central zone of the spiral while the orifice (29b-1) of the discharge channel (29b) is located at the periphery of the spiral, the width of the groove (35) is equal to the diameter of the intake orifice (29a-1) and the diameter of the discharge orifice (29b-1),
the element for holding having the form of a crown (30) comprising an inner cylindrical portion (30a-1) and an outer annular portion (30a-2), said inner cylindrical portion (30a-1) extending inside the base (28) and defining a central opening (30b) allowing the liquid (L) to come into contact with the membrane (32), the outer annular portion (30a-2) resting on the base (28), the membrane (32) and the support disc (34) being held on the gas capturing face (28c) of the base (5) by an end (30c) of the inner cylindrical portion (30a-1).

2. Capturing stopper (24) according to claim 1, **characterised in that** the means for guiding (35) create a gas guiding circuit between the discharge orifice (29b-1) and the intake orifice (29a-1).

3. Capturing stopper (24) according to one of the preceding claims, **characterised in that** the support disc (34) is porous.

4. Capturing stopper (24) according to one of the preceding claims, **characterised in that** the membrane (32) is in the form of a silicone disc.

5. Capturing stopper (24) according to one of the preceding claims, comprising at least one O-ring (36).

6. Device (20) for measuring the value of at least one parameter of at least one gas dissolved in a liquid (L), said device (20) being configured to be immersed in said liquid (L) and comprising a body (22), wherein a sensor for measuring the value of at least one parameter of at least one gas dissolved in the liquid (L) is mounted, and a capturing stopper (24), according to one of the preceding claims, mounted on said body (22), the body (22) comprising an gas inlet conduit (27a) that is in fluid communication with the intake channel (29a) of the gas of the capturing stopper (24) and an outlet channel (27b) of gas that is in fluid communication with the discharge channel (29b) of the gas of the capturing stopper (24).
